Europäisches Patentamt

European Patent Office

Office européen des brevets

(19)

(11) Numéro de publication : **0 012 311**
**B1**

(12) FASCICULE DE BREVET EUROPÉEN

(45) Date de publication du fascicule du brevet :
28.04.82

(51) Int. Cl.³ : **G 01 F 23/28, C 21 B 7/24**

(21) Numéro de dépôt : **79104837.4**

(22) Date de dépôt : **03.12.79**

(54) **Dispositif de montage d'une sonde radar pour fours à cuve.**

(30) Priorité : **12.12.78 LU 80645**

(43) Date de publication de la demande :
**25.06.80 (Bulletin 80/13)**

(45) Mention de la délivrance du brevet :
**28.04.82 Bulletin 82/17**

(84) Etats contractants désignés :
**AT BE DE FR GB IT NL SE**

(56) Documents cités :
**DE - B - 2 417 222**
**DE - B - 2 658 443**

(73) Titulaire : **PAUL WURTH S.A.**
**32 rue d'Alsace**
**L-1122 Luxembourg (LU)**

(72) Inventeur : **Legille, Edouard**
**165 r. de Trèves**
**Luxembourg (LU)**
Inventeur : **Kremer, Victor**
**27 rue Ermesinde**
**Luxembourg (LU)**
Inventeur : **Breden, Emile**
**29 rue du Village**
**Godbrange (LU)**
Inventeur : **Peters, Jean**
**8 rue de Syren**
**Hassel (LU)**

(74) Mandataire : **Meyers, Ernest et al**
**c/o FREYLINGER & ASSOCIES Postfach 1153, 46 rue
du Cimetière**
**Luxemburg (LU)**

Imprimerie Jouve, 18, rue St-Denis, 75001 Paris, France

Dispositif de montage d'une sonde radar pour fours à cuve

La présente invention concerne un dispositif de montage d'une sonde radar pour fours à cuve constituée essentiellement par une unité électronique disposée à l'extérieur du four, une antenne émettrice et réceptrice disposée à l'intérieur du four au-dessus de la surface de chargement et reliée par un guide d'ondes à l'unité électronique, ainsi que par des moyens pour faire osciller l'antenne.

Une sonde de ce genre est décrite dans le brevet luxembourgeois n° 70 310. Une telle sonde a l'avantage de pouvoir fournir comme résultat de mesure une courbe représentant le profil de la surface de chargement, raison pour laquelle elle est généralement désignée par « profilomètre ». Une telle sonde constitue bien entendu un progrès technique considérable par rapport aux sondes classiques, telles que les sondes mécaniques verticales qui ne fournissent qu'un seul point de mesure, c'est-à-dire qu'il faut avoir recours à une sonde par point de mesure, autrement dit, un grand nombre de sondes si l'on veut avoir une représentation plus ou moins acceptable du profil de la surface de chargement. Un tel profilomètre complète avantageusement un équipement de chargement à goulotte rotative, généralement connu sous le nom de « gueulard sans cloches ». Dans ce type de chargement un tel profilomètre convient notamment pour une commande automatique, c'est-à-dire que l'on peut effectuer automatiquement et périodiquement, par exemple après chaque dépôt d'une couche de chargement ou selon un programme bien déterminé, une mesure du profil de la surface de chargement, dont les résultats peuvent servir à la commande ou à la correction de l'entraînement de la goulotte de distribution pour le dépôt ultérieur du matériau de chargement.

Toutefois, si ces profilomètres radar ont pu être testés avec succès sur des stands d'essai, ils n'ont pas encore pu être rendus opérationnels sur des hauts fourneaux. En effet, leur mise en service impliquait la solution de différents problèmes d'ordre mécanique qui n'ont pu être résolus jusqu'à présent.

Un de ces problèmes est celui de l'isolation de la sonde par rapport à l'intérieur du four. En effet, pour les besoins d'entretien de la sonde, celle-ci doit pouvoir être démontée sans que ce démontage provoque une perturbation de l'opération du four, ce qui implique la présence d'un moyen permettant d'isoler, de manière hermétique, la sonde par rapport à l'intérieur du four. Or, vu que l'antenne radar émet un faisceau divergent vers la surface de chargement et que ce faisceau effectue en outre un mouvement de balayage, l'ouverture dans la paroi supérieure du four nécessaire au passage du faisceau conique des ondes électro-magnétiques doit être relativement grande, ceci d'autant plus que le diamètre d'une telle antenne parabolique ne peut être inférieur à 300 mm. Le problème consiste donc à pouvoir obturer de manière étanche et à dégager une telle ouverture sans perturber ni le fonctionnement de la sonde, ni l'opération du four.

Un second problème est celui du maintien de la propreté de l'antenne. En effet, celle-ci étant forcément exposée aux conditions régnant au-dessus de la surface de chargement, il se produit très rapidement un dépôt de poussière sur le miroir parabolique, à un tel point que la sonde devient inutilisable après quelques jours d'exposition.

La présente invention vise à résoudre ces problèmes, autrement dit, le double objectif de pouvoir isoler l'antenne, de manière étanche, au moyen d'un dispositif simple et peu encombrant et de maintenir l'antenne suffisamment propre de façon à pouvoir fonctionner correctement pendant une durée raisonnable. A cet effet, l'invention prévoit un dispositif de montage d'une sonde radar du genre décrit dans le préambule qui est essentiellement caractérisé par une cloche mobile déplaçable, au moyen d'un mécanisme de commande disposé à l'extérieur du four, entre une position opérative correspondant au fonctionnement de l'antenne et une position de repos correspondant à une isolation hermétique de l'antenne par rapport à l'intérieur du four.

Grâce à cette cloche, l'antenne n'est exposée aux conditions du four que le temps de son fonctionnement pour sonder le profil de la surface de chargement du four, tandis que le reste du temps elle est protégée à l'intérieur de cette cloche.

Afin de protéger l'antenne également pendant son opération de sondage, l'invention prévoit accessoirement un dispositif de soufflage dirigé sur les surfaces exposées de l'antenne afin de réduire les risques d'un dépôt lorsqu'elle n'est pas protégée par la cloche.

Selon un premier mode de réalisation, la sonde est supportée dans la paroi latérale d'une chambre communiquant par son fond avec l'intérieur du four, cette chambre étant pourvue d'un carter latéral du côté opposé à celui de la sonde, alors que la cloche subit un mouvement de translation entre ladite position opérative dans laquelle elle occupe ledit carter et la position de repos dans laquelle est elle appliquée hermétiquement sur un siège fixé sur la paroi de la chambre autour des moyens de support de l'antenne. Selon l'une des caractéristiques de ce mode de réalisation, la sonde peut être démontée et dégagée en bloc à travers une ouverture dans la paroi de la chambre à l'intérieur du siège de la cloche.

La cloche peut être fixée sur la tige d'un vérin traversant la paroi latérale de ce carter. Selon une variante, ce carter peut constituer directement le cylindre du vérin, tandis que la cloche est, dans ce cas, solidaire du piston. Le vérin peut, dans un cas comme dans l'autre, être constitué par un vérin hydraulique ou pneumatique.

Selon un deuxième mode de réalisation, la cloche est supportée dans les parois d'une chambre communiquant avec l'intérieur du four et l'antenne pénètre depuis l'extérieur de la chambre dans la cloche dont elle est solidaire. Cette cloche est pourvue d'une ouverture latérale en face de l'antenne et le déplacement de la cloche entre la position opérative et la position de repos consiste à tourner la cloche avec l'antenne d'un certain angle autour de l'axe longitudinal de la cloche pour amener son ouverture latérale en face d'un couvercle destiné à fermer hermétiquement ladite ouverture. Ce couvercle est actionné au moyen d'un vérin pour fermer et dégager cette ouverture.

Cette cloche permet par conséquent de résoudre simultanément les deux problèmes qui ont jusqu'à présent empêché la mise en service d'une sonde radar, à savoir le problème de l'isolation de l'antenne et celui de la propreté de celle-ci.

D'autres particularités et caractéristiques de quelques modes de réalisation de l'invention ressortiront de la description détaillée présentée ci-dessous, à titre d'illustration, en référence aux dessins annexés dans lesquels :

la figure 1 représente schématiquement une section verticale d'un premier mode de réalisation ;

la figure 2 est une vue analogue à celle de la figure 1 et montre le démontage de la sonde ;

la figure 3 montre une variante du mode de réalisation selon la figure 1 ;

la figure 4 est une vue schématique en coupe verticale d'un second mode de réalisation ;

la figure 5 est une vue en coupe suivant le plan V-V sur la figure 4 ;

la figure 6 est une vue analogue à celle de la figure 4 et montre le démontage de la sonde ;

la figure 7 montre une variante du mode de réalisation selon la figure 4 et

la figure 8 montre schématiquement une antenne avec un dispositif de soufflage.

Dans les différentes figures, on a utilisé les mêmes chiffres de référence pour désigner des éléments correspondants.

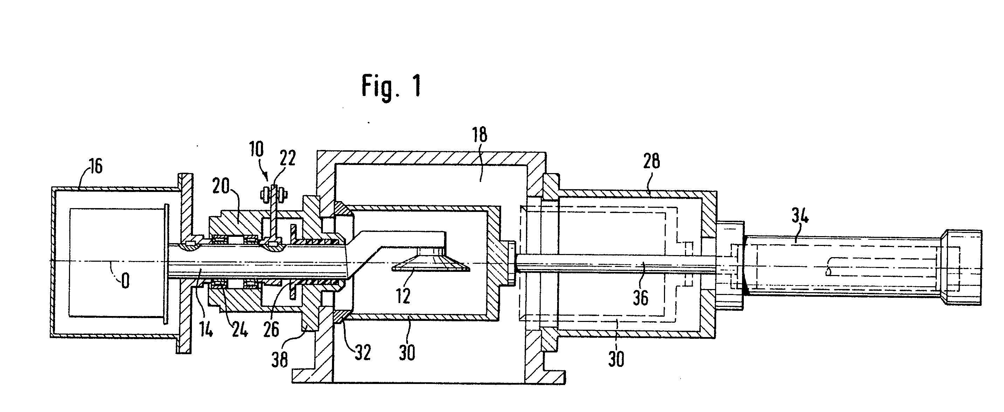

La figure 1 montre un premier mode de réalisation d'un dispositif de montage d'une sonde radar, désignée dans son ensemble par la référence 10 et décrite en détail dans le brevet luxembourgeois 70 310. Cette sonde 10 comporte essentiellement une antenne émettrice et réceptrice 12 disposée à l'intérieur d'une chambre 18 formée dans la paroi supérieure d'un four non représenté. La sonde 10 est supportée dans un bloc de montage 20 fixé sur la paroi latérale de la chambre 18. L'antenne 12 est reliée à travers un arbre 14 à une unité électronique 16 de transformation et de traitement des informations des mesures à l'extérieur de la chambre 18. L'antenne 12 peut être constituée, de manière connue en soi, par un réflecteur parabolique au foyer duquel aboutissent un ou plusieurs guides d'ondes, non montrés, traversant l'arbre 14 jusqu'à l'unité électronique 16. Pour plus d'informations concernant la sonde radar 10 ainsi que son fonctionnement, on se référera au brevet précité.

Un dispositif d'entraînement non représenté communique par l'intermédiaire d'une bielle 22 un mouvement oscillant à l'arbre 14 autour de l'axe O afin de balayer, de préférence diamétralement, la surface de chargement à l'aide du faisceau radar émis par l'antenne 12. Pour permettre ce mouvement oscillant, l'arbre 14 est supporté dans le bloc 20 au moyen des roulements 24, tandis que l'étanchéité entre l'extérieur et l'intérieur de la chambre 18 est assurée par un presse-étoupe 26.

Selon l'une des particularités du dispositif de montage selon l'invention, l'unité électronique 16 est solidaire de l'arbre 14 et de l'antenne 12, de sorte que l'unité électronique 16 oscille en bloc avec l'arbre 14 et l'antenne 12 autour de l'axe O pendant l'opération de sondage. Ceci présente l'avantage que les guides d'ondes reliant l'antenne 12 à l'unité électronique 16 peuvent être conçus de manière rigide et ne seront pas tordus par l'oscillation de l'antenne 12.

Selon l'une des caractéristiques essentielles du dispositif de montage selon l'invention, une cloche 30, de forme sensiblement cylindrique, est déplaçable entre la position illustrée en traits pleins dans laquelle elle est appliquée hermétiquement sur un siège annulaire 32 autour de l'arbre 14 et une position illustrée en traits interrompus dans laquelle elle occupe une position de garage dans un carter latéral 28 prévu dans le prolongement de l'axe O de la sonde. Le mouvement de translation de la cloche 30 est engendré au moyen d'un vérin 34 fixé à l'extérieur du carter 28 et dont la tige de piston 36 est reliée directement à la cloche 30 à l'intérieur du carter 28. Le vérin 34 peut être hydraulique ou pneumatique. Toutefois, pour éviter tout risque de fuites d'huile vers l'intérieur de la chambre 18, un vérin pneumatique aura la préférence.

Lors des séances de sondage pour mesurer le profil de la surface de chargement, la cloche 30 occupe la position illustrée en traits interrompus dans le carter 28 afin de ne pas entraver les mesures. Dès qu'une mesure est terminée, la cloche 30 est déplacée dans la position illustrée en traits pleins afin d'isoler, de manière hermétique, l'antenne 12 par rapport à l'intérieur du four et la soustraire de cette manière à l'action néfaste des conditions régnant au-dessus de la surface de chargement.

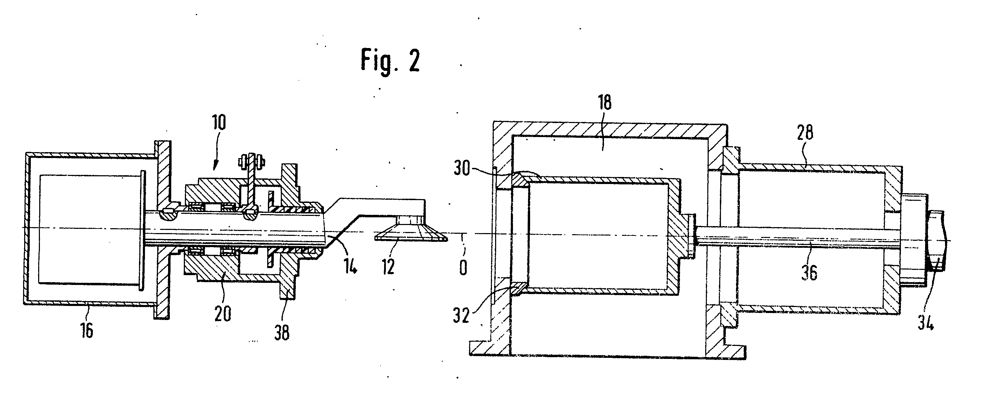

Dans cette position de la cloche 30, il est possible, comme le montre la figure 2, de procéder au démontage de la sonde 10. Selon l'une des particularités, la sonde 10 peut être démontée en bloc vu qu'il suffit de défaire des fixations, non montrées, entre une bride 38 du bloc 20 et la paroi de la chambre 18. Etant donné que l'ouverture laissée dans la paroi de la chambre 18 par le dégagement de la sonde 10 est fermée hermétiquement par la coopération entre le siège 32 et la cloche 30, le démontage de la sonde 10 ne perturbe pas le fonctionnement du four 10. En outre, il est possible d'amener la sonde 10 en bloc dans les ateliers pour lui faire subir les travaux d'entretien ou de réparation.

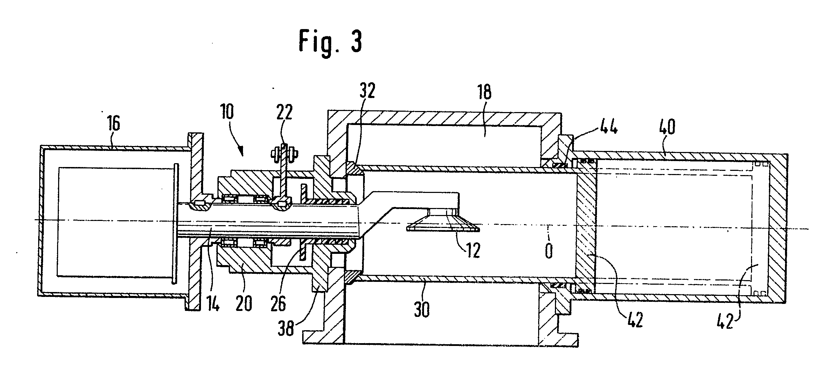

La figure 3 montre une variante du mode de réalisation décrit ci-dessus convenant plus particulièrement lorsqu'il existe des problèmes d'encombrement. Dans ce mode de réalisation, le vérin pour la commande de la cloche 30 est fixé directement sur la chambre 18 et non pas sur un carter intermédiaire. En fait, ce carter de la figure 1 constitue, dans le mode de réalisation de la figure 3, le cylindre d'un vérin 40. Ce vérin comporte un piston coulissant 42, ce piston constituant le fond de la cloche 30. Dans ce cas également, il est préférable de prévoir un vérin pneumatique pour les mêmes raisons que précédemment. Les conduites pour amener le fluide pneumatique ou hydraulique en vue du déplacement du piston 42 n'ont pas été représentées sur la figure. Un joint 44 assure l'étanchéité entre l'intérieur du vérin 40 et la chambre 18. Les autres éléments de la figure 3 sont identiques à ceux des deux figures précédentes et ne seront plus décrits en détail.

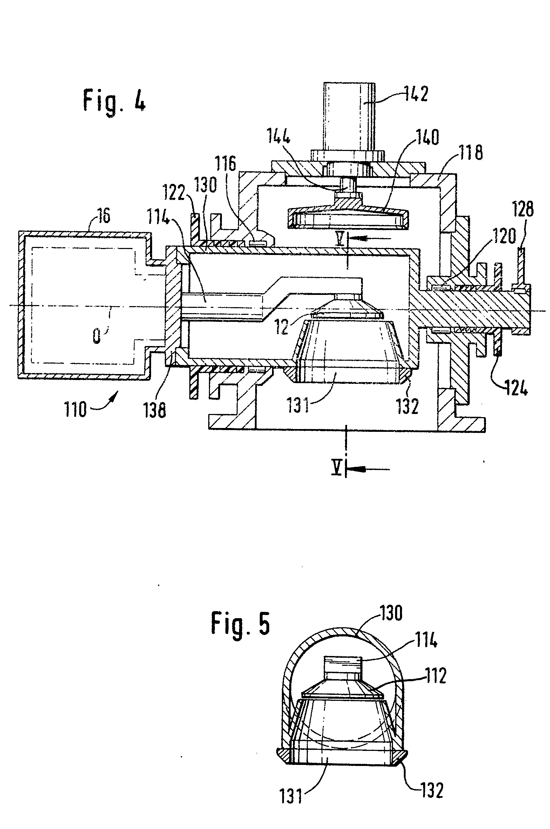

La sonde 110 selon la figure 4 comporte également une antenne émettrice-réceptrice 12 reliée par un ou plusieurs guides d'ondes à travers un arbre 114 à une unité électronique 16. Comme dans le cas précédent, l'unité électronique 16, l'antenne 12 et l'arbre 114 forment un seul bloc, fixé par des moyens non représentés, par l'intermédiaire d'une bride 138 sur une cloche 130. Cette cloche 130 est logée au moyen de roulements 116 et 120 associés à des presse-étoupe 122, 124, dans les parois d'une chambre 118 prévue dans la paroi supérieure d'un four. La cloche 130 peut être pivotée ensemble avec l'antenne autour de l'axe O et à cet effet la cloche subit l'action d'une bielle 128 entraînée par un moteur électrique non représenté.

Comme le montrent les figures 4 et 5, la cloche 130 comporte une ouverture latérale 131 disposée en face de l'antenne 12 et permettant, dans la position représentée sur la figure 4, le balayage de la surface de chargement par les ondes électro-magnétiques. Ce balayage, c'est-à-dire l'oscillation de l'antenne 12 autour de l'axe O, est provoqué par le pivotement de la bielle 128.

A l'intérieur de la chambre 118 est prévu un couvercle 140 destiné à fermer, de manière hermétique, l'ouverture 131. A cet effet, cette ouverture est bordée par un siège 132 correspondant au bord du couvercle 140. Ce couvercle 140 est actionné par un vérin 142, de préférence pneumatique, dont la tige de piston 144 traverse la paroi de la chambre 118. Pour assurer une bonne fermeture de l'ouverture 131, il est possible de prévoir un certain jeu dans la fixation entre la tige 144 et le couvercle 140 afin que celui-ci épouse parfaitement le siège 132 et assure une étanchéité parfaite entre l'intérieur de la cloche 130 et la chambre 118 en position fermée.

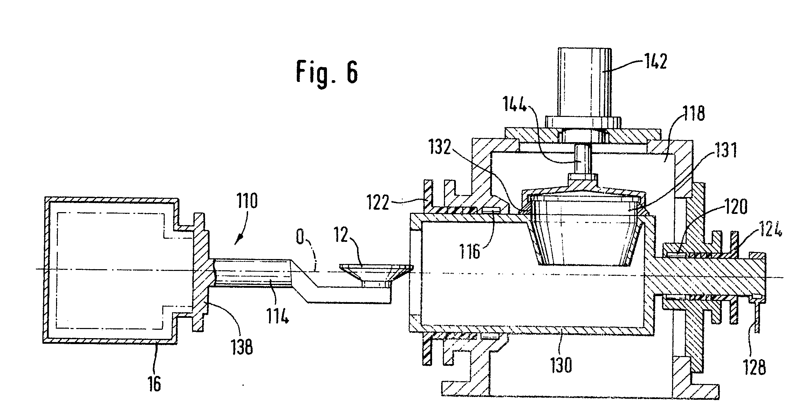

Lors d'une séance de sondage, le dispositif occupe la position selon la figure 4 et la bielle 128 est actionnée de manière que l'antenne 12 oscille autour de l'axe O et que les faisceaux électro-magnétiques balaient diamétralement la surface de chargement. Dès que le sondage est terminé, l'ensemble formé par la cloche 130 et la sonde 110 est tourné autour de l'axe O par l'intermédiaire de la bielle 128 de manière à amener l'ouverture 131 en face du couvercle 140. Dès lors, le vérin 142 est actionné pour appliquer le couvercle 140 de manière hermétique sur le siège 132. Cette position est illustrée sur la figure 6.

A partir de ce moment, l'antenne 12 est isolée totalement de l'intérieur du four. Pour démonter la sonde 110, il suffit de défaire la fixation, non montrée, entre la bride 138 et la cloche 130.

Dans le mode de réalisation représenté sur les figures 4 à 6, la cloche 130 effectue une rotation de 180° pour passer de la position selon la figure 4 dans celle de la figure 6. Il faut, toutefois, noter que ceci n'est qu'un exemple de réalisation et qu'il suffirait, par exemple, d'une rotation de 90°, à condition toutefois que le vérin 142 et le couvercle 140 soient prévus sur la paroi latérale de la chambre 118.

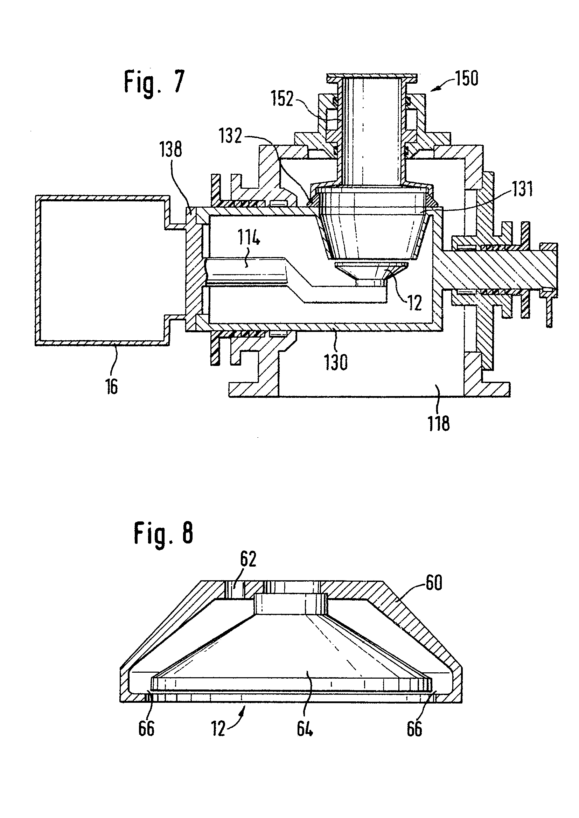

La figure 7 montre une variante selon laquelle le dispositif pour fermer l'ouverture 131 de la cloche 130 comporte un vérin 150 dont le piston 152 est conçu de manière à être appliqué directement sur le siège 132. Ce système est donc comparable à celui de la figure 3 pour actionner la cloche 30. Le vérin 150 est également, de préférence, du type pneumatique.

Le mode de réalisation de la figure 7 présente l'avantage de permettre un accès à l'antenne à travers le piston creux 152, notamment en vue d'un nettoyage soit avec des outils appropriés soit avec un jet d'un fluide sous pression. En outre, il est possible d'inspecter l'antenne à travers le piston 152.

Le mode de réalisation selon les figures 4 à 7, à cloche rotative, présente plusieurs avantages par rapport aux modes de réalisation selon les figures 1 à 3. D'abord, l'encombrement est plus réduit étant donné que le mouvement de la cloche n'implique pas d'espace supplémentaire par rapport à celui de la chambre 118. En outre, l'unité électronique 116 peut être montée directement sur la cloche 130, c'est-à-dire sans la présence du bloc de montage 20 selon la figure 1, ce qui facilite le montage et le démontage de la sonde 110. Il faut également noter que le mode de réalisation à cloche pivotante ne comporte que des joints à rotation, ce qui est plus facilement réalisable du point de vue technique.

La figure 8 montre un système de soufflage pour améliorer davantage les conditions de propreté d'une antenne 12. A cet effet, le réflecteur parabolique 64 est entouré d'un cône 60 dans le fond duquel est prévu un orifice 62 pour l'admission d'un fluide sous pression, tel que de l'azote ou du gaz de haut fourneau épuré. Le bord du cône 60 forme avec le bord du réflecteur 64 une buse circulaire périphérique 66 dirigeant le gaz sous pression sur la surface exposée du réflecteur 64. A l'aide d'une telle soufflerie, il est possible d'enlever les dépôts de poussière sur la surface du réflecteur 64 et, en outre, de créer des remous ou turbulences en dessous du réflecteur 64 tendant à réduire les risques de dépôt. L'amenée du gaz sous pression est réalisée par des conduites non montrées traversant l'arbre 14 ou 114.

Il est à noter que la soufflerie peut être actionnée aussi bien pendant les phases de sondage que pendant la durée où l'antenne est renfermée dans la cloche 30 ou 130.

Il va de soi que le dispositif de montage proposé ci-dessus est également valable pour d'autres types d'antennes que celui montré dans les modes de réalisation décrits ci-dessus. Il est notamment possible de prévoir deux antennes séparées pour l'émission respectivement la réception des ondes électro-magnétiques.

## Revendications

1. Dispositif de montage d'une sonde radar pour fours à cuve constituée essentiellement par une unité électronique (16) disposée à l'extérieur du four, une antenne émettrice et réceptrice (12) disposée à l'intérieur du four au-dessus de la surface de chargement et reliée par un guide d'ondes à l'unité électronique (16), ainsi que par des moyens pour faire osciller l'antenne, caractérisé par une cloche mobile (30) (130) déplaçable, au moyen d'un mécanisme de commande disposé à l'extérieur du four, entre une position opérative correspondant au fonctionnement de l'antenne (12) et une position de repos correspondant à une isolation hermétique de l'antenne (12) par rapport à l'intérieur du four.

2. Dispositif selon la revendication 1, caractérisé en ce que la sonde est supportée dans un bloc de montage (20) fixé sur la paroi latérale d'une chambre (18) communiquant par son fond avec l'intérieur du four, cette chambre étant pourvue d'un carter latéral (28) du côté opposé à celui du bloc de montage (20) alors que la cloche (30) subit un mouvement de translation entre ladite position opérative dans laquelle elle occupe ledit carter (28) et la position de repos dans laquelle elle est appliquée hermétiquement sur un siège (32) fixé sur la paroi de la chambre (18) autour du passage de la sonde dans la chambre (18).

3. Dispositif selon les revendications 1 et 2, caractérisé en ce que l'antenne est reliée de manière rigide à l'unité électronique (16) au moyen d'un arbre (14) et en ce que les moyens pour faire osciller l'antenne agissent sur ledit arbre (14), pour faire osciller, en bloc, l'antenne (12) et l'unité électronique (16) autour de l'axe longitudinal de cet arbre (14).

4. Dispositif selon les revendications 1 et 2, caractérisé en ce que le mécanisme de commande est constitué par un vérin (34) dont la tige de piston (36) traverse la paroi du carter (28) et est reliée rigidement au fond de la cloche (30).

5. Dispositif selon les revendications 1 et 2, caractérisé en ce que le mécanisme de commande de la cloche (30) est constitué par un vérin (40) dont le cylindre est formé par ledit carter et dont le piston (42) est constitué par le fond de la cloche (30).

6. Dispositif selon la revendication 1, caractérisé en ce que la cloche (130) est supportée au moyen de roulements (116,120) dans les parois opposées d'une chambre (118) communiquant avec l'intérieur du four, en ce que l'antenne (12) pénètre depuis l'extérieur de la chambre (118) dans la cloche (130) dont elle est solidaire, en ce que ladite cloche (130) est pourvue d'une ouverture latérale (131) en face de l'antenne 12 et en ce que le déplacement de la cloche (130) entre la position opérative et la position de repos consiste à tourner la cloche (130) avec l'antenne (12), d'un certain angle, autour de l'axe longitudinal de la cloche (130) pour amener l'ouverture latérale (130) en face d'un couvercle (140) destiné à fermer hermétiquement ladite ouverture (131).

7. Dispositif selon la revendication 6, caractérisé en ce que ladite ouverture latérale (131) est entourée par un siège (132) sur lequel est appliqué ledit couvercle (140).

8. Dispositif selon les revendications 1 et 6, caractérisé en ce que les moyens pour faire osciller l'antenne (12) et le mécanisme de commande de la cloche (130) sont constitués par un moteur unique agissant sur le bloc formé par l'unité électronique (16), l'antenne (12) et la cloche (130) afin de faire pivoter ce bloc autour de l'axe longitudinal de celui-ci.

9. Dispositif selon l'une des revendications 6 ou 7, caractérisé en ce que ledit couvercle (140) est fixé à l'extrémité de la tige d'un vérin (142) monté dans la paroi de la chambre (118) perpendiculairement au plan de pivotement de la cloche (130).

10. Dispositif selon les revendications 6 et 7, caractérisé en ce que ledit couvercle (140) forme en même temps le piston (152) d'un vérin (150) incorporé dans la paroi de la chambre (118).

11. Dispositif selon l'une des revendications 4, 5, 9, 10, caractérisé en ce que le vérin (34) (40) (142) est constitué par un vérin pneumatique.

12. Dispositif selon l'une des revendications 2 ou 6, caractérisé en ce que l'antenne (12) et l'unité électronique (16) sont démontables en bloc pendant le fonctionnement du four et lors de la position de repos de la cloche (30) (130).

13. Dispositif selon l'une des revendications précédentes, caractérisé par un cône (60) entourant la surface latérale de l'antenne (12) et formant avec le bord périphérique de la surface de réflexion une buse circulaire (66) pour diriger un fluide sous pression sur la surface exposée de l'antenne, ce fluide étant amené par une ouverture (62) au fond du cône (60) reliée à une conduite sous pression à travers l'arbre reliant l'antenne à l'unité électronique.

## Claims

1. Apparatus for mounting a radar probe in shaft furnaces, essentially consisting of an electronic unit (16) positioned outside the furnace, an emitter and receiver aerial (12) positioned inside the furnace, above the charging surface, and connected by a wave guide to the electronic unit (16), and also of means for causing the aerial to oscillate, characterized by a displaceable bell-shaped structure (30) (130) which is movable, by means of a control mechanism situated outside the furnace, between an operative position, corresponding to the operation of the aerial (12), and a position of rest, corresponding to the hermetic isolation of the aerial (12) from the interior of the furnace.

2. Apparatus in accordance with Claim 1, characterized by the fact that the probe is supported in a mounting block (20) affixed to the lateral wall of the chamber (18) of which the base communicates with the interior of the furnace and which is provided with a lateral case (28) on the side opposite to that of the mounting block (20), while the bell (30) performs a traversing movement between the said operative position, in which it occupies the said case (28), and the position of rest, in which it is pressed hermetically against a seating (32) mounted in the wall of the chamber (18), around the passage of the probe into the chamber (18).

3. Apparatus in accordance with Claims 1 and 2, characterized by the fact that the aerial is rigidly connected to the electronic unit (16) by means of a shaft (14) and that the means by which the aerial is caused to oscillate act on the said shaft (14) in order to set up an oscillating movement in the aerial (12) and the electronic unit (16), as one single assembly, about the longitudinal axis of the said shaft (14).

4. Apparatus in accordance with Claims 1 and 2, characterized by the fact that the control mechanism consists of a jack (34) of which the piston rod (36) passes through the wall of the case (28) and is rigidly connected to the base of the bell (30).

5. Apparatus in accordance with Claims 1 and 2, characterized by the fact that the control mechanism of the bell (30) consists of a jack (40) of which the cylinder is formed by the said case and in which the piston (42) is formed by the base of the bell (30).

6. Apparatus in accordance with Claim, characterized by the fact that the bell (130) is supported by means of bearings (116, 120) in the opposite walls of a chamber (118) communicating with the interior of the furnace, that the aerial (12) penetrates from the outside of the chamber (118) into the bell (130), with which it is integral, that the said bell (130) is provided with a lateral aperture (131) opposite to the aerial (12) and that the process of moving the bell (130) between the operative position and the position of rest consists of the rotation of the bell (130), with the aerial (12), through a certain angle, about the longitudinal axis of the bell (130), in order to bring the lateral aperture (131) into position in front of the cover (140) designed to close the said aperture (131) hermetically.

7. Apparatus in accordance with Claim 6, characterized by the fact that the said lateral aperture (131) is surrounded by a seating (132) against which the said cover (140) is pressed.

8. Apparatus in accordance with Claims 1 and 6, characterized by the fact that the means by which the aerial (12) and the control mechanism of the bell (130) are caused to oscillate consists of one single motor acting on the assembly formed by the electronic unit (16), the aerial (12) and the bell (130), in order to pivot this unit about the longitudinal axis of this latter.

9. Apparatus in accordance with either of Claims 6 and 7, characterized by the fact that the said cover (140) is affixed to the end of the rod of a jack (142) mounted in the wall of the chamber (118) perpendicularly to the pivoting plane of the bell (130).

10. Apparatus in accordance with Claims 6 and 7, characterized by the fact that the said cover (140) at the same time forms the piston (152) of the jack (150) incorporated in the wall of the chamber (118).

11. Apparatus in accordance with one of Claims 4, 5, 9 and 10, characterized by the fact that the jack (34), (40) (142) is of the pneumatic type.

12. Apparatus in accordance with one of Claims 2 and 6, characterized by the fact that the aerial (12) and electronic unit (16) can be dismantled as one complete single assembly during the operation of the furnace and while the bell (30) (130) occupies its position of rest.

13. Apparatus in accordance with one of the preceeding claims, further comprising a cone (60) surrounding the lateral surface of the aerial (12) and forming, with the peripheral edge of the reflection surface, a circular nozzle (66) serving to direct a fluid under pressure onto the exposed surface of the aerial, this fluid being supplied through an aperture (62) which is provided in the base of the cone (60) and which is connected to a pressure conduit via the shaft connecting the aerial to the electronic unit.

**Ansprüche**

1. Montagevorrichtung für Radarsonden an Schachtöfen, im wesentlichen bestehend aus einer elektronischen, ausserhalb des Ofens angeordneten Einheit (16), einer innerhalb des Ofens über dem Schmelzbett angeordneten Sende- und Empfangsantenne (12), welche durch einen Wellenleiter mit der elektronischen Einheit verbunden ist, sowie Mitteln zum Schwenken der Antenne, gekennzeichnet durch eine bewegliche Glocke (30, 130), welche mittels eines ausserhalb des Ofens angeordneten Betätigungsmechanismus zwischen einer Betriebsstellung beim Arbeiten der Antenne (12) und einer Ruhestellung, in welcher die Antenne (12) hermetisch vom Innern des Ofens abgeschlossen ist, bewegt werden kann.

2. Vorrichtung nach Anspruch 1, dadurch gekennzeichnet, dass die Sonde in einem an der Seitenwand einer Kammer (18) befestigten Montageblocks gehalten ist, wobei diese Kammer durch eine Bodenöffnung mit dem Innern des Ofens verbunden und mit einem seitlichen Gehäuse (28) auf der entgegengesetzten Seite vom Montageblock (20) versehen ist, während die Glocke (30) eine Translationsbewegung erfährt zwischen der genannten Betriebsstellung, in welcher sie sich in diesem Gehäuse (28) befindet, und ihrer Ruhestellung, in welcher sie hermetisch dicht gegen einen Sitz (32) gedrückt wird, welcher an der Wand der Kammer (18) um den Durchlass der Sonde in die Kammer (18) herum angebracht ist.

3. Vorrichtung nach den Ansprüchen 1 und 2, dadurch gekennzeichnet, dass die Antenne starr mittels einer Welle (14) mit der elektronischen Einheit (16) verbunden ist und dass die Mittel zum Schwenken der Antenne auf diese Welle (14) einwirken um die Antenne (12) und die elektronische Einheit (16) als Ganzes um die Längsachse dieser Welle (14) herum hin- und herzuschwenken.

4. Vorrichtung nach den Ansprüchen 1 und 2, dadurch gekennzeichnet, dass der Betätigungsmechanismus aus einem Linearmotor (34) besteht, dessen Kolbenstange (36) durch die Wand des Gehäuses (28) hindurchgeht und starr mit dem Boden der Glocke (30) verbunden ist.

5. Vorrichtung nach den Ansprüchen 1, und 2, dadurch gekennzeichnet, dass der Betätigungsmechanismus für die Glocke (30) aus einem Linearmotor (40) besteht, dessen Zylinder durch das genannte Gehäuse gebildet wird und dessen Kolben (42) durch den Boden der Glocke (30) dargestellt wird.

6. Vorrichtung nach Anspruch 1, dadurch gekennzeichnet, dass die Glocke (130) in den gegenüberliegenden Seiten einer Kammer (118), welche mit dem Ofeninnern in Verbindung steht, mittels Wälzlagern (116, 120) gelagert ist, dass die Antenne (12) von ausserhalb der Kammer (118) in die Glocke (130), mit der sie eine mechanische Einheit bildet, hineinragt, dass die Glocke (130) gegenüber der Antenne (12) mit einer seitlichen Oeffnung (131) versehen ist, und dass die Bewegung der Glocke (130) zwischen ihrer Betriebs- und ihrer Ruhestellung darin besteht, dass die Glocke (130) mitsamt der Antenne (12) um einen bestimmten Winkel um die Längsachse der Glocke (130) geschwenkt wird, zum Heranführen der seitlichen Oeffnung (131) gegenüber von einem Deckel (140), welcher zum hermetischen Abschliessen dieser Oeffnung (131) bestimmt ist.

7. Vorrichtung nach Anspruch 6, dadurch gekennzeichnet, dass die seitliche Oeffnung (131) von einem Sitz (132) umgeben ist, auf welchen der Deckel (140) gedrückt wird.

8. Vorrichtung nach den Ansprüchen 1 und 6, dadurch gekennzeichnet, dass die Mittel zum Schwenken der Antenne (12) und der Betätigungsmechanismus für die Glocke (130) aus einem einzigen Motor besteht, welcher auf den durch die elektronische Einheit (16), die Antenne (12) und die Glocke (130) gebildeten Block einwirkt, um diesen Block um dessen Achse zu schwenken.

9. Vorrichtung nach den Ansprüchen 6 und 7, dadurch gekennzeichnet, dass der Deckel (140) an der Extremität der Kolbenstange eines Linearmotors (142) befestigt ist, welcher senkrecht zur Schwenkachse der Glocke (130) an der Wandung der Kammer (118) angebracht ist.

10. Vorrichtung nach den Ansprüchen 6 und 7, dadurch gekennzeichnet, dass der Deckel (140) gleichzeitig der Kolben (152) eines Linearmotors (150) ist, welcher in der Wandung der Kammer (118) integriert ist.

11. Vorrichtung nach den Ansprüchen 4, 5, 9 und 10, dadurch gekennzeichnet, dass der Linearmotor (34, 40, 142) ein Pneumatikzylinder ist.

12. Vorrichtung nach den Ansprüchen 2 und 6, dadurch gekennzeichnet, dass die Antenne (12) und die elektronische Einheit (16) als Ganzes während dem Betrieb des Ofens und in der Ruhestellung der Glocke (30, 130) demontiert werden können.

13. Vorrichtung nach den Ansprüchen 1 bis 12, gekennzeichnet durch einen die Seitenfläche der Antenne (12) umgebenden Konus (16), welcher mit dem peripheren Rand der Reflektionsfläche eine ringförmige Düse (66) bildet zum Anblasen der exponierten Oberfläche der Antenne mit einem unter Druck stehenden Fluid, wobei dieses Fluid durch eine am Boden des Konus (60) befindliche Oeffnung (62) zugeführt wird, welche ihrerseits an eine Druckleitung durch die die Antenne und die elektronische Einheit verbindende Welle hindurch angeschlossen ist.

## Fig. 1

Fig. 2

## Fig. 3

Fig. 4

Fig. 5

Fig. 6

0012311

Fig. 7

138    132    152    150

131

114    12

16    130    118

Fig. 8

62    60

66    12    64    66